# EUROPEAN PATENT APPLICATION

(11) **EP 4 755 171 A1**
(43) Date of publication of application: **10.06.2026**
(21) Application number: 25216914.9
(22) Date of filing: 19.11.2025
(51) Int. Cl.: A01D 41/127, A01D 43/08, A01D 41/12

(54) **HARVESTING MACHINE MONITORING**

(30) Priority: 09.12.2024 GB 202418031
(71) Applicant: AGCO International GmbH, 8212 Neuhausen am Rheinfall (CH)
(72) Inventor: Christiansen, Martin Peter, 8930 Randers (DK); Christensen, Albert, DK-8930 Randers (DK); Steen, Kim Arild, 8930 Randers (DK); Kaiser, Johannes, 87616 Marktoberdorf (DE); Groetsch, Johannes, 87616 Marktoberdorf (DE)
(74) Representative: AGCO Intellectual Property Department

(57) **Abstract**

A system for monitoring and tracking one or more crop properties associated with a batch of crop material processed by a harvesting machine. The harvesting machine is provided with a crop quality sensor 24 having a sensing region which covers crop material processed by the harvesting machine or components thereof. A tracking sensor is operably coupled to the harvester and includes a sensing region which comprises, at least in part, an external environment of the harvester 2. Data from the crop quality sensor 24 is used to determine a quality measurement associated with a batch of crop material, and sensor data received from the tracking sensor 32 is used to determine an identity of a support vehicle within the environment of the harvester. The crop property(ies) is used to generate an operational plan for the identified support vehicle.

## Description

### CROSS-REFERENCE TO RELATED APPLICATIONS

Not applicable.

### FIELD

Embodiments of the present disclosure relate generally to monitoring and tracking crop properties of crop material processed by an agricultural machine.

### BACKGROUND

A harvesting machine such as a combine harvester or forage harvester may work to cut and process crop material in/from an agricultural environment. Typically this includes use of a cutting apparatus such as a header which works to cut growing crop or plant material from a field and transfer this to one or more processing apparatus for processing the crop. This may include further cutting, crimping, or crushing of the crop material, e.g. in the example of a forage harvester, or may include a threshing a separating apparatus in example of a combine harvester to separate grain or kernel material from material other than grain. Processed crop material may subsequently be unloaded from the machine into a support vehicle such as a grain or grass cart, as will be appreciated.

At the same time, it is known to provide optical sensing system on harvesting machines for analysing harvested crop material. This may include monitoring a condition of grainlike material (e.g. kernels), which may relate to a level of processing applied to the crop material by the machine, and/or crop disease or other issue identification. Additionally, the optical systems may be used to identify the presence of material other than grain in the collected crop material relating to the yield or efficiency of the harvesting operation. Additionally or alternatively, crop quality or processing sensors may be utilised to monitor a length or quality of cut, for example, of grass-type crops.

It is an aim of embodiments of the present disclosure to utilise and improve upon these known technologies to provide a harvesting machine monitoring system.

### BRIEF SUMMARY

A first aspect of the disclosure provides a system for monitoring and tracking one or more crop properties associated with a batch of crop material processed by the harvesting machine, the system comprising: the harvesting machine; a crop quality sensor operably coupled to the harvesting machine having a sensing region which comprises, at least in part, crop material processed by the harvesting machine or components thereof; a tracking sensor operably coupled to the harvesting machine having a sensing region which comprises, at least in part, an external environment of the harvesting machine; and one or more controllers, operably configured to: determine, from first sensor data received from the crop quality sensor, one or more crop properties indicative of a quality measurement associated with a batch of crop material; determine, from second sensor data received from the tracking sensor, an identity of a support vehicle within the environment of the harvesting machine; and generate, for the identified support vehicle, an operational plan in dependence on the determined one or more crop properties.

Advantageously, the present solution provides means to automatically generate an operational plan for an identified support vehicle in dependence on the identity of that support vehicle and one or more crop properties for a batch of material unloaded into that support vehicle. As discussed herein, the operational plan may include, e.g. a storage location, specific grain pile, a requirement for further processing (e.g. drying) of the crop material, etc. based on measurable properties of the crop material within that batch, and optionally direct the operator of the support vehicle, or in some instances automatically navigate the support vehicle to a given location for subsequent offloading of the crop material. This may be particularly beneficial for future use of said crop, e.g. selling or use for livestock feed where the crop is already pre-sorted in dependence on crop property(ies) determined "on-the-go" at the harvesting machine.

The one or more controllers may collectively comprise an input (e.g. an electronic input) for receiving one or more input signals. The one or more input signals may comprise the first and/or second sensor data. The one or more controllers may collectively comprise one or more processors (e.g. electronic processors) operable to execute computer readable instructions for controlling operation of the system, for example, to determine the one or more crop properties and/or determine the identity of the support vehicle. The one or more processors may be operable to generate one or more control signals for controlling operation of one or more operable components associated with the system, e.g. in accordance with the determined operational plan. This may include a user interface, and the one or more controllers may collectively comprise an output (e.g. an electronic output) for outputting the one or more control signals for initiating control of the user interface in dependence on the determined operational plan for communicating that plan to an operator.

Determination of the operational plan may include determining, in dependence on the crop property(ies) and/or determined identity of the support vehicle a storage location for a respective batch of crop material. This may be performed on the basis of storing batches with the same or similar crop property(ies) at any given storage location.

Determination of the operational plan may include determining, in dependence on the crop property(ies), a requirement for further processing of the crop material batch within the given support vehicle. This may be performed to direct given support vehicles to a relevant location within the agricultural environment for further processing of the crop held therein. This can include, in some examples, a dryer or other processing apparatus.

In embodiments, the one or more controllers may be configured to initiate control of a user interface of the support vehicle (e.g. a display terminal of the support vehicle) for displaying a graphical representation of the determined crop property(ies) for the batch of crop material unloaded into the support vehicle and/or the operational plan. For instance, the one or more crop properties may relate to a quality measure of the crop material, and an operator of the support vehicle may be instructed via the determined operational plan on which of a plurality of stores to subsequently offload the batch of crop material for storage. This may allow for efficient operational management of the agricultural activity, grouping multiple batches of crop material depending on the determined crop property(ies).

In further embodiments, the one or more controllers may be configured to initiate control of a user interface of the harvesting machine (e.g. a display terminal of the harvesting) for displaying a graphical representation of the determined crop property(ies) for the batch of crop material unloaded into a given support vehicle and/or the operational plan. This may be utilised by an operator of the harvesting machine for coordinating the agricultural operation based on the determined plan. For instance, an operator of the harvesting machine may be able to use the determined operational plan to coordinate support vehicle(s) and other components of the agricultural operation on, for example, which of a plurality of stores to subsequently offload the batch of crop material for storage from the support vehicle. This may allow for efficient operational management of the agricultural activity, grouping multiple batches of crop material depending on the determined crop property(ies).

The system may comprise means for communicating the determined operational plan to an operator of the support vehicle, for example. This can include respective communications modules provided as part of the harvesting machine and/or support vehicle, which may be communicable over a wireless network, such as a cellular or satellite network.

In yet further embodiments, the one or more controllers may be configured to initiate control of a remote user interface associated with the agricultural operation (e.g. a display terminal at a control location for the farming operation) for displaying a graphical representation of the determined crop property(ies) for the batch of crop material unloaded into a given support vehicle and/or the determined operational plan. As with the harvesting machine display terminal, an operator at the remote control location may be able to coordinate the agricultural operation in accordance with the determined operational plan utilising this output.

The crop quality sensor may comprise an optical sensor. The crop quality sensor may comprise a camera.

The one or more controllers may be configured to receive and analyse the first sensor data from the crop quality sensor for determining the one or more crop properties. This may include identifying one or more crop material components within the first sensor data. The one or more controllers may be configured to perform an object recognition process on first sensor data received from the crop quality sensor for identifying individual crop material components within the sensor data, and optionally determining one or more crop properties thereof.

The one or more crop properties may include a measure of one or more dimensions of crop material component(s). The crop size measure may relate to a length, width, shape, surface area or estimate of a volume of the identified crop material components, for example. The one or more crop properties may include a measure of a colour or hue of crop material components.

The one or more crop properties may comprise a measure of a processing score for the crop material. This may comprise a measure of an amount of processing applied to the crop material by the harvesting machine (or components thereof). For corn crop, this may comprise a corn silage processing score (CSPS), being a measure of a ratio of crop material components which are at or above a given threshold size indicative of adequate processing of the crop material by the harvesting machine (or components thereof).

The one or more crop properties may include a measure of a crop yield, which may include, for example, a measure of a number of coverage of identified crop material components within the first sensor data. This may include a count of individual crop components. This may include a calculation of a percentage coverage of identified crop components.

The one or more crop properties may include an identification of the presence or absence of one or more anomalous objects within the batch of crop material. The anomalous object(s) may comprise weed material, stones or other foreign objects within the crop material.

The crop quality sensor may be configured to be coupled, in use, to the harvesting machine at or proximal to a volume of crop associated with the harvesting machine. This may include, for example, a crop quality sensor positioned within a grain tank or other container of the harvesting machine. The crop quality sensor may be configured to be coupled, in use, to the harvesting machine at or proximal to a crop flow associated with the harvesting machine.

Where the harvesting machine comprises a forage harvester, the crop quality sensor may be configured to be coupled, in use, with a sensing region which encompasses a crop flow in a discharge spout of the forage harvester. Where the harvesting machine comprises a combine harvester, the crop quality sensor may be configured to be coupled, in use, with a sensing region which encompasses material within or processed by a grain elevator of the combine harvester, for example.

The tracking sensor may comprise an optical sensor. The tracking sensor may comprise a camera. The tracking sensor may comprise a transceiver-type sensor. That is, the tracking sensor may comprise a sensing modality which includes a transmitter element for transmitting a sensing signal and a receiver for receiving reflected sensor signals from a sensing region associated with the sensor. This may include a LIDAR, RADAR or ultrasonic based sensor, for example.

The one or more controllers may be configured to receive and analyse the second sensor data from the tracking sensor for determining the identity of a support vehicle in the environment of the harvesting machine. This may include identifying one or more objects within the second sensor data. The one or more controllers may be configured to perform an object recognition process or classification process, e.g. based on a machine learned classification algorithm, on second sensor data received from the tracking sensor for identifying the support vehicle. The object recognition process may be utilised to identify a size, shape, operational movement or the like of objects within the environment of the harvesting machine, and determine an identity of the support vehicle in dependence thereon. In other embodiments, the support vehicle(s) may be provided with a graphical identifier, e.g. a QR code or other graphical tag which may be identified within the second sensor data by the one or more controllers.

The one or more controllers may be configured to identify an unloading event through analysis of the second sensor data from the tracking sensor. Identification of an unloading event may comprise a start and/or stop time for when crop material is unloaded from the harvesting machine to a given support vehicle.

The one or more controllers may be configured to associate the batch of crop material and the associated one or more crop properties with the identified support vehicle. This association may comprise linking data entries in a memory means accessible by the one or more controllers. The memory means may be a local memory, e.g. as part of the harvester or the support vehicle, for example. In further embodiments, the memory means may comprise a remote server accessible via a communications module of or otherwise associated with the system.

In embodiments, the one or more controllers may be configured to associate the batch of crop material and the associated one or more crop properties with the identified support vehicle in dependence on an identification of an occurrence of an unloading event.

The one or more controllers may be configured to make the association of the batch of crop material and the associated one or more crop properties with the identified support vehicle in dependence on a timing of the identified unloading event. For example, the one or more controllers may utilise the timing of the unloading event and an operational delay relating to an expected processing time of crop material by the harvesting machine to determine the association. The operational delay may relate to a time taken or crop material to move from the location of the crop quality sensor to an outlet of an unloading mechanism of the harvesting machine. This may ensure that the determined crop property(ies) relate to the crop material being unloaded at any given time.

The one or more controllers may be configured to initiate collection of the first and/or second sensor data in dependence on an identification of an unloading event and/or determining an identity of a support vehicle. For example, the one or more controllers may be configured to employ a trigger mechanism for determining the one or more crop properties in dependence on a positive identification of a support vehicle and/or a positive identification of the initiation of an unloading event into said support vehicle. The one or more controllers may be configured to cease analysis of the first sensor data in dependence on a determination of a stop time for a given unloading event.

The harvesting machine may comprise a harvester. This may be a forage harvester for cutting and optionally processing forage crop, such as grass crops, corn or the like. The forage harvester may comprise a discharge spout for unloading crop material processed by the forage harvester to a support vehicle, for example. The harvesting machine may comprise a combine harvester, for cutting and processing cereal crop, such as corn, wheat or other grain crops. The combine harvester may comprise an unloading auger for unloading processed crop material (e.g. grain material) into a support vehicle.

The support vehicle may comprise a grain cart or grass cart into which material collected and processed by the harvesting machine may be unloaded, in use.

Another aspect of the disclosure provides a control system for monitoring and tracking one or more crop properties associated with a batch of crop material processed by a harvesting machine, the control system comprising one or more controllers which are collectively configured to: receive first sensor data, from a crop quality sensor operably coupled to the harvesting machine having a sensing region which comprises, at least in part, crop material processed by the harvesting machine or components thereof; receive second sensor data from a tracking sensor operably coupled to the harvesting machine having a sensing region which comprises, at least in part, an external environment of the harvesting machine; determine, from the first sensor data, one or more crop properties indicative of a quality measurement associated with a batch of crop material; determine, from the second sensor data an identity of a support vehicle within the environment of the harvesting machine; and generate, for the identified support vehicle, an operational plan in dependence on the determined one or more crop properties.

The one or more controllers of the control system may be configured in the same manner as the controller(s) of the monitoring and tracking system described hereinabove.

A further aspect provides a method of monitoring and tracking one or more crop properties associated with a batch of crop material processed by a harvesting machine, the method comprising: receiving first sensor data from a crop quality sensor operably coupled to the harvesting machine having a sensing region which comprises, at least in part, crop material processed by the harvesting machine or components thereof; receiving second sensor data from a tracking sensor operably coupled to the harvesting machine having a sensing region which comprises, at least in part, an external environment of the harvesting machine; determining, from the first sensor data, one or more crop properties indicative of a quality measurement associated with a batch of crop material; determining, from the second sensor data, an identity of a support vehicle within the environment of the harvesting machine; and generating, for the identified support vehicle, an operational plan in dependence on the determined one or more crop properties.

The method may comprise performing any one or more of the functionalities of the system (or components thereof) or control system described hereinabove.

A further aspect of the invention provides computer software comprising computer readable instructions which, when executed by one or more electronic processors, causes performance of a method in accordance with any aspect described herein.

A yet further aspect of the invention provides a computer readable medium having the computer software of the preceding aspect of the invention stored thereon.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating a harvesting machine embodying aspects of the present disclosure; and
FIG. 2 is a schematic illustration showing an operational use of aspects of the present disclosure;
FIG. 3 is a schematic block diagram showing a control system arrangement for the present disclosure;
FIG. 4 illustrates sensor data and associated crop characteristic measures illustrating an operational use of the present disclosure; and
FIG. 5 illustrates an embodiment of a distributed agricultural operation embodying aspects of the present disclosure.

### DETAILED DESCRIPTION

The present solution relates to systems and method for monitoring and tracking one or more crop properties associated with a batch of crop material processed by a harvesting machine, here a forage harvester 2, although numerous different harvesting machines may be equally applicable. The described system includes the harvesting machine which is provided with a crop quality sensor 24 operably coupled to the harvester 2, and has a sensing region which comprises, at least in part, crop material processed by the harvesting machine or components thereof - i.e. in a crop flow path which may be within an unloading mechanism such as a discharge spout 22 of a forage harvester 2. A tracking sensor Is also provided which is operably coupled to the harvester 2 and includes a sensing region which comprises, at least in part, an external environment of the harvester 2. First sensor data received from the crop quality sensor 24 can be analyses, e.g. in the manner discussed herein, to determine one or more crop properties indicative of a quality measurement associated with a batch of crop material. In addition, sensor data received from the tracking sensor 32 is used to determine an identity of a support vehicle within the environment of the harvester 2.

Numerous operational steps may be taken in dependence on these two determinations, such as associating crop material in a given batch with a given crop property to a given identified support vehicle, determining from any association or based on the crop property(ies) themselves an operational plan for further processing of any batch of crop material, displaying information to an operator working the overall agricultural operation or active control over the harvester 2 (or components thereof) itself.

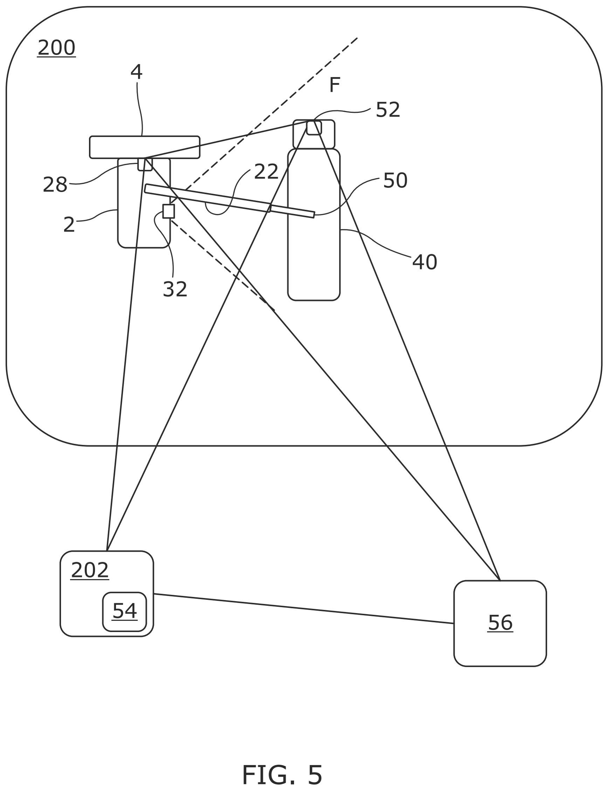

An overview of the system is shown in FIG. 5, which illustrates a distributed agricultural operation which embodies components of the solutions described herein. Specifically, harvester 2 is illustrated operating within a field 200 alongside a support vehicle 40. Crop material which has been processed by the harvester 2 is unloaded via crop stream 50 into the support vehicle, e.g. into a trailer towed by a tractor, with the unloaded material then transported by the support vehicle 40 to a separate location for further processing and/or storing.

The system extends to a control location 202 which may be an office or remote computer etc. where an oversight of the agricultural operation can be provided, along with a remote data store 56 stored on a cloud based server accessible by components of the system. As shown, and detailed hereinbelow, each component (e.g. harvester 2, support vehicle 40, control location 202 and data store 56) may each be communicably coupled for exchanging information and/or optionally controlling further components of the system, as required.

### Harvester

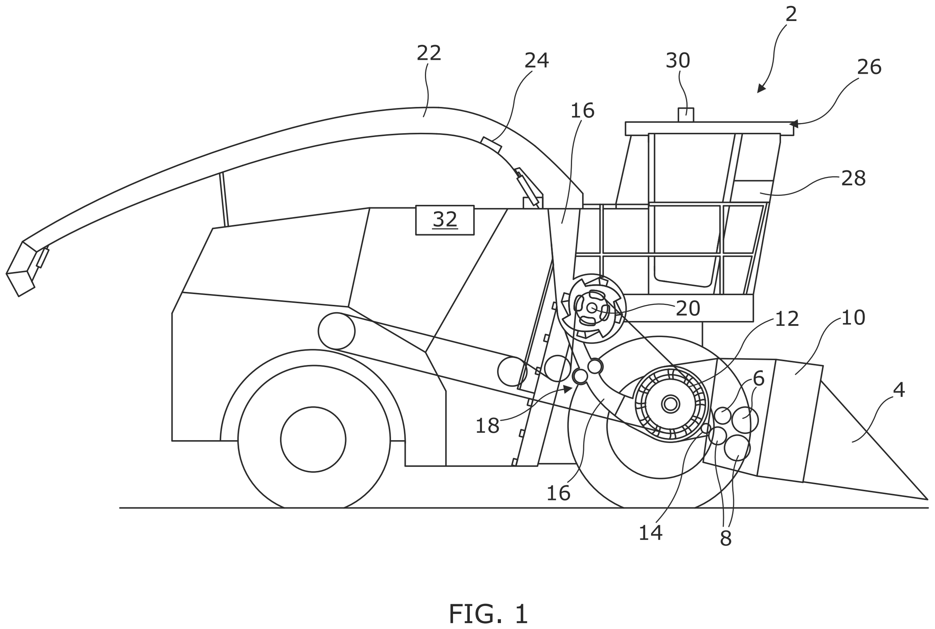

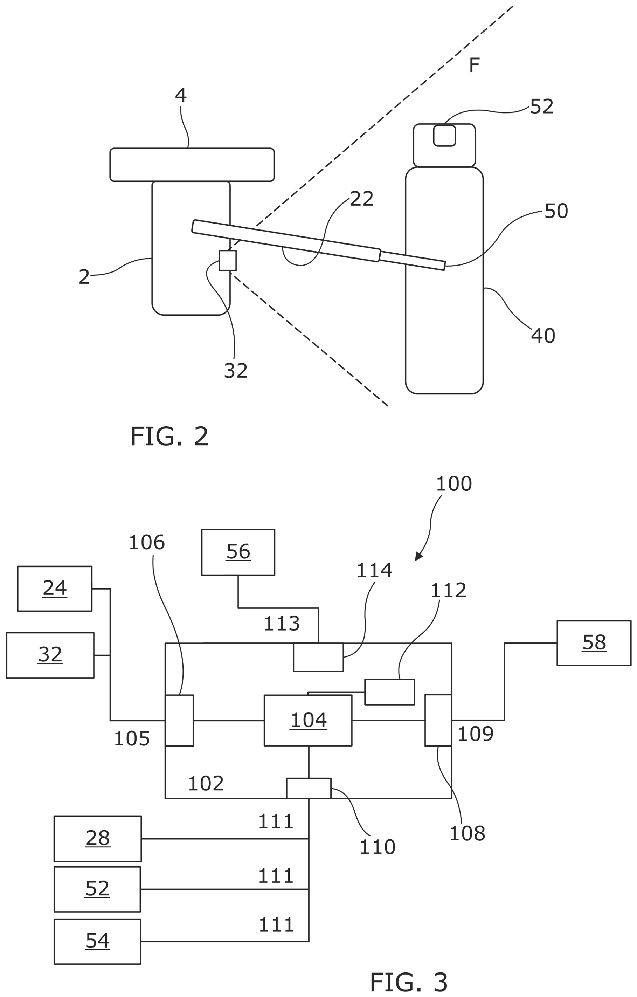

FIGs. 1 and 2 illustrate an agricultural harvesting machine in the form of a forage harvester 2 further. The forage harvester 2 is provided with a front attachment, here a header 4 comprising cutting equipment for cutting and harvesting a crop from a working environment. The cut crop is fed from the header 4 via associated feed rollers 6, 8 in a housing 10 to a chopper drum 12 where the crop is chopped into smaller pieces between the chopper drum 12 and an associated shear bar 14. The chopped crop passes through a duct 16 and is optionally directed into a cracker unit 18 where the crop is further crushed and threshed. The chopper drum 12, shear bar 14, cracker unit 18 and other associated components may herein be referred to collectively as the crop processing apparatus of the forage harvester 2. The processed crop is then blown upwards along the duct 16 by an accelerator 20 and exits through a spout 22 directing the processed crop into a trailer or other vehicle moving alongside the forage harvester 2, as will be appreciated.

The forage harvester 2 is further provided with an operator's cab 26. A user interface in the form of a display terminal 28 is located within the operator's cab 26 to communicate information to the operator regarding the operation of the forage harvester 2, and specifically under control of the system 100 in the manner discussed herein for communicating information to the operator regarding the operational state of a control system 100, the crop processing apparatus, etc.

### Sensor Arrangement

As is discussed herein, the forage harvester 2 is provided with a crop quality sensor 24 for determining one or more crop properties for crop material processed by the harvester 2. The crop quality sensor 24 is provided, in the illustrated embodiment, within the unloading spout 22 of the harvester for imaging crop material passing therethrough. The crop quality sensor is in the form of a camera 24 configured to obtain image data of crop material moving through the unloading spout 22 of the forage harvester 2.

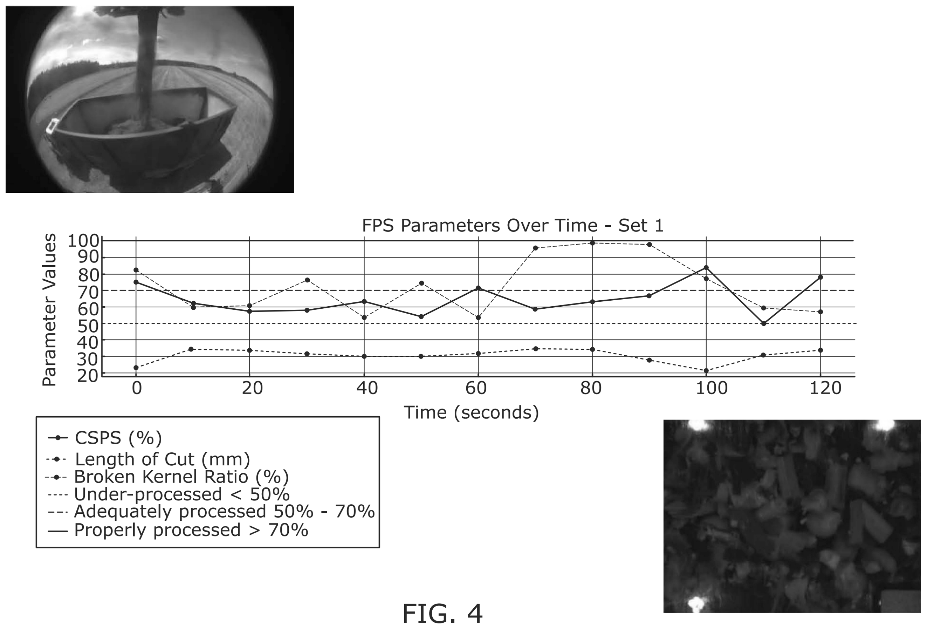

As discussed herein, first sensor data in the form of image data generated by the crop quality sensor 24 is analysed by one or more controllers (e.g. controller 102 - see below) for determining therefrom one or more crop properties or other information (e.g. anomalous object detection) relating to the crop material imaged by the sensor 24. Here, this includes performance of an object recognition process for identifying crop and non-crop components within the image data. Any suitable object recognition process may be employed, and the proposal is not limited in this sense, as will be appreciated. For instance, in some use cases the object recognition process may include application of a machine learned classification process, neural network or the like to classify individually identified components with the image. This classification can include an identification of specific crop components, of non-crop components (e.g. anomalous/foreign objects in the image), of one or more processing characteristics of the identified components (e.g. processed vs unprocessed). The controller(s) may further interpret the classified sensor data, e.g. as discussed hereinbelow, to determine one or more crop properties for the crop material. An example image from crop quality sensor 24 is provided in FIG. 4.

A crop quality sensor of the type discussed here is also described in detail in the Applicant's European Patent Application No. 24206828.6, which is incorporated herein in its entirety.

It will be noted that this location of the crop quality sensor 24 is provided as an example, only. The sensor 24 may be housed in a sensor unit which may be located on the outside of the spout 22, for example, having an imaging region or sensing surface within the spout 22. The sensor 24 may be provided further up or downstream of the illustrated location. Further locations are also equally applicable and will be understood by the skilled person. Where the harvesting machine comprises a different harvester type, such as a combine harvester, the sensor 24 may be positioned within a crop flow associated with the harvester, which may be in a grain elevator, or grain bin, for example.

Along with the crop quality sensor 24, the forage harvester 2 is additionally provided with a tracking sensor 32, in the illustrated embodiment in the form of a camera 32 mounted to the side of the harvester 2 and having a field of view F which encompasses a region within the working environment adjacent to the harvester 2. The tracking sensor 32 may be referred to interchangeably herein in respect of this illustrated embodiment as a tracking sensor, tracking camera or simply camera. As discussed herein, sensor data from the tracking camera 32 is utilised to identify a support vehicle, here grass cart 40 within the working environment of the harvester 2.

As discussed herein, second sensor data in the form of image data generated by the tracking camera 32 is analysed by one or more controllers (e.g. controller 102 - see below) for identifying therein a support vehicle, e.g. grass cart 40, operating within the working environment of the harvester 2. Here, this includes performance of an object recognition process for identifying the support vehicle(s), however, any suitable object recognition process may be employed, and the proposal is not limited in this sense, as will be appreciated. For instance, in some use cases the object recognition process may include application of a machine learned classification process, neural network or the like to classify objects within the image data. This classification can include an identification of specific trailers, towing vehicles, or the like. In further embodiments, the support vehicle(s) may be provided with a unique visual marker affixed thereto which may be identified by the controller(s) within the image data obtained by tracking camera 32. Example image data received from the tracking camera 32 is provided in FIG. 4.

Identification of the support vehicle (e.g. grass cart 40) may extend to identifying the occurrence of an unloading event of crop material from the harvester 2 into the grass cart 40. This may be performed through analysis of the second sensor data from the tracking camera 32, as discussed, to identify a start and/or stop time for when crop material is unloaded from the harvesting machine to a given support vehicle. Turning to FIG. 2, for example, this may involve identifying, through analysis of the sensor data, the presence of the crop stream 50 from the unloading spout 22 of the harvester 2. This is also shown in FIG. 4, with the stream of crop material visible and identifiable in the image data from the tracking camera 32.

The timing of the unloading event and optionally an operational delay relating to an expected processing time of crop material by the harvester 2 can be used to determine whether any given crop material batch is unloaded into a particular (and identified) support vehicle - e.g. grass cart 40. It will be appreciated that crop may take a given or an average length of time to be processed by the harvester 2, e.g. due to the time taken to pass through crop processing components of the harvester 2, for the time taken for the crop material to move along and be ejected from the spout 22, for example, Specifically, it may be important to understand the time taken for crop material to move from the location of the crop quality sensor 24 to an outlet of the spout 22, for example as this may ensure that the determined crop property(ies) relate to the crop material being unloaded at any given time and into a particular support vehicle. Operational characteristics of the harvester 2, or components thereof, such as an operational speed, fan speed etc. may be used to determine or estimate an operational delay. Accordingly, this may be computed in real time depending on the operational state of the harvester 2.

### Crop Properties

Embodiments of the disclosure relate to determining one or more crop properties for crop material imaged by the crop quality sensor 24. This is illustrated figuratively in FIG. 4, where a number of crop material properties (or a measure thereof) is graphically displayed over time as determined utilising sensor data from the crop quality sensor 24. In the illustrated embodiment these include a corn silage processing score (CSPS), a length of cut, and a broken kernel ratio, each normalized against a score of 100. Further processing level "thresholds are provided for comparison.

The length of cut may be obtained from determining crop properties including a measure of one or more dimensions of crop material component(s) within the sensor data from the crop quality sensor 24. This can include length for length of cut, but also width, shape, surface area or estimate of a volume of the identified crop material components, for example. Shape/surface area of kernel components may provide an indication of a level of processing applied in a corn crop, for example. Ultimately, crop material batches with similar sized/dimensioned material components may be stored (and later sold, for example), together.

The CSPS is indicative of an amount of processing applied to the crop material by the forage harvester 2 (or components thereof). For corn crop, the CSPS is a measure of a ratio of crop material components which are at or above a given threshold size indicative of adequate processing of the crop material by the forage harvester 2. The threshold size measure is typically predefined and relates to the digestibility of crop material by livestock and may typically only be achieved if the corn kernel is cracked/crushed. Here, crop material batches with a CSPS at a sufficient score may be marked for livestock feed, whereas those which do not achieve the desired level may not be. By associating these material properties with given batches, crop material with different properties can be kept separate, and more easily and efficiently be used later.

Additional or alternative crop properties may include a measure of a colour or hue of the crop material components, or a measure of a crop yield, for example. The one or more crop properties may additionally or alternatively include an identification of the presence or absence of one or more anomalous objects within the batch of crop material. The anomalous object(s) may comprise weed material, stones or other foreign objects within the crop material, and appropriate actions may be taken upon identification of such objects - see below.

### Association

Embodiments of the disclosure extend to associating a batch of crop material having one or more determined crop properties with a given support vehicle utilising the tracking camera data. This association may advantageously be used to, for example, plan an operational task, e.g. a storage location, specific grain pile for material having like properties, a requirement for further processing (e.g. drying) of the crop material, etc. based on measurable properties of the crop material within that batch.

Associating crop material property(ies) and/or a specific batch of crop material with a given support vehicle here includes linking data entries in a memory means accessible by computational components of the system. Here this include the use of a memory means in the form of data store 56 which is a remote data store hosted on a remote or cloud based server and accessible via a wireless communications network. It will be appreciated that the location of the data store is not essential, and many different configurations may be possible.

The stored data can be retrieved and processed/interpreted to either manually by an operator for the agricultural operation or automatically generate an operational plan for any given batch of crop material. As discussed throughout this description, this may be a decision on a specific storage location for the crop material batch (e.g. with like crop material), or determination of further processing requirements for a given batch.

### User interface

Embodiments of the disclosure extend to presenting information relating to the determined crop property(ies), identified support vehicle(s), any association between a given batch of crop material and a specific support vehicle and/or any determined operational plan therefor on a user interface for interpretation by one or more operators working the overall agricultural operation.

This information may be presented as a graphical representation of, for example, the data entries in stored in the data store for analysis and interpretation by an operator. The operator may use this information to decide on how to further deal with any given batch of crop material, e.g. by directing an associated support vehicle to an appropriate location or to perform an appropriate operational task.

The user interface may be any one or more of a display terminal 28 on the harvester 2, a display terminal 52 of a support vehicle, a remote terminal 54 provided at a control location for the agricultural operation, etc. or a combination thereof. Operators at any of those locations may then manually plan subsequent processing steps for the respective batches.

### Operational Plan

Further embodiments may incorporate automatically generating an operational plan for given batches of crop material on the basis of the determined crop property(ies), and any association with a given support vehicle, e.g. grass cart 40. This may involve appropriate programming of a computational means for interpreting the data received and stored, e.g. at data store 56 and generating an operational plan in dependence thereon. This may include understanding any requirements for crop material with given crop property(ies), e.g. further processing requirements, available storage locations for crop material having given crop property(ies), machine availabilities, operator availabilities, etc. Numerous different variables may be considered.

The operational plan may be executed manually by one or more operators for the agricultural operation, or may involve some form of automation, either in part or fully automated. For instance, the generated operational plan may be presented for an operator utilising a user interface, in a similar manner to that discussed above. However, where available, the system may use any autonomous capability of the harvester 2, support vehicle 40 or any further componentry for automating some processes, such as transferring any identified support vehicle with a given batch of crop material to a desired location, or to automatically offload at a storage location, for example.

### Foreign Object Detection & Action

Embodiments of the disclosure extend to initiating one or more control actions for components associated with the harvester 2 and/or the support vehicle in dependence on the determined crop property(ies). Specifically, where anomalous material, such as a foreign body/object is identified in the sensor data from the crop quality camera 24, one or more preventative actions may be taken to either prevent or reduce the likelihood of the anomalous object being unloaded into the support vehicle.

Foreign or anomalous objects may be identified based on any one or more of the crop properties discussed herein. For example, a size or shape of an object which falls outside of an expected or predicted measure for a given crop type may be flagged as an anomaly, accordingly. A colour or hue may also be useful for identifying anomalous objects.

Example control actions include control over crop processing components of the harvester 2, e.g. to reduce the crop flow through the machine and ultimately pause the unloading operation. Additionally or alternatively, the unloading spout 22 of the harvester 2 may be controlled directly to move the spout or the flow of crop material 50 away from the support vehicle 40. This can include moving the entire spout 22 and/or one or more operable components thereof, such as a flap or other outlet control member at the end of the spout 22 for controlling the discharge direction.

Examples of spout control and associated mechanisms are provided in the Applicant's European Patent application 24199734.5, which is incorporated herein in its entirety.

### Control System

FIG 3 illustrates an embodiment of a control system 100 of the present disclosure. As discussed herein, the control system 100 comprises a controller 102 operably connected to the crop quality sensor 24 and the tracking camera 32. The control system 100 is configured for controlling one or more operable components 28, 52, 54, 56 associated with the forage harvester 2 in the manner discussed herein. In the illustrated embodiment, the controllable operable components include a first user interface in the form of a display terminal 28 of the forage harvester 2, a second user interface in the form of a display terminal 52 of the support vehicle 40, and a remote user interface 54, e.g. at a control location for overseeing an agricultural operation performed utilising the harvester 2, grass cart 40 and one or more further machines. In addition, the controller 102 is further communicably coupled with a data store 56 for storing, e.g. an association between one or more crop properties, an identity of a support vehicle (e.g. grass cart 40) and the like.

It will be appreciated that when discussed here and throughout, the controller 102 being configured to "control operation" of these operable components may include direct control via direct control signals, or may include local control units associated with one or more of the operable control units which may independently retrieve or receive information/control instructions from the controller 102 or an intermediary, such as the data store 56 and control operation of those components (e.g. through display of graphical representation(s) via display terminals 28, 52, 54) independently. Accordingly, each of the electronic outputs 110, 114 illustrated may form or utilise a communications module associated with the controller 102 for outputting control signals, data signals or the like for communicating information, via the intermediary component, to local control units of the display terminals 28, 52, 54.

As shown, control system 100 comprises a controller 102 having an electronic processor 104, an electronic input 106 and electronic outputs 108, 110, 114. The processor 104 is operable to access a memory 112 of the controller 102 and execute instructions stored therein to perform the steps and functionality of the present disclosure discussed herein, e.g. by controlling the display terminals 28, 52, 54 (see above) to provide a relevant graphical representation, and/or accessing data store 56 for storing data therein, and/or actively controlling operation of one or more components of the harvester 2, e.g. for controlling the unloading of crop material therefrom.

The processor 104 is operable to receive data from the crop quality sensor 24 via input 106 which, in the illustrated embodiment, takes the form of input signals 105. As discussed herein, the data forms first sensor data imaging crop material processed by the harvester 2 and is analysed by processor 104, e.g. in the manner discussed herein, for determining one or more crop properties therefrom, and/or for identifying the presence of one or more anomalous objects in the crop material.

The processor 104 is also operable to receive image data from the tracking camera 32, here in the form of input signals 105 from the camera 32. Similarly, the processor 104 is configured to analyse the image data from the tracking camera (again in the manner discussed herein) to identify a support vehicle, here grass cart 40 within the working environment of the harvester 2, and optionally identify an unloading operation of crop material into that support vehicle from harvester 2.

Controller 102 includes an electronic output 114 configured to output control signals 113 generated by the processor 104 for communicating with the data store 56. As will be appreciated, the data store 56 may be a remote data store hosted remotely on a cloud based or remote based server, for example, accessible over a wireless communications network. Equally, the data store may be a local memory means hosted on the harvester 2, the support vehicle 40 or at the control location. Here, processor 104 is operable to generate, and the controller 102 operable to then output via output 114, control signals 113 for storing at the data store 56 information relating to the operation of the control system 100, including one or more crop properties determined in the manner described herein, an association between a batch of crop material and any given crop property(ies), an operational plan for any given batch or crop properties, and/or information relating to the presence of anomalous objects within a given batch of crop material or at a given location within the working environment.

Output 110 is operably coupled to the display terminals 28, 52, 54 directly or indirectly - see above, with the control system 100 being operable to control operation or cause control of the operation of the display terminals 28, 52, 54 e.g. through output of control signals 111 in order to display data to an operator of the harvester 2, the support vehicle 40 or a remote operator at the control location relating to the operation of the control system 100. Specifically, the display terminals 28, 52, 54 may be used to display to the operator a graphical representation of one or more crop properties, an association between a specific batch of crop material and a particular support vehicle. As discussed herein, this may be utilised by operators of the respective machines to plan a subsequent offloading process from the support vehicle 40, e.g. for storage, sale, or the like of the collected crop material.

Output 108 is utilised, in the illustrated embodiment, for outputting control signals 109 for controlling operation of the discharge spout 22 of the harvester 2. As discussed, this control may be performed on the basis of the identification of anomalous objects in a batch of crop material, e.g. to avoid unloading the object(s) into the support vehicle to avoid contamination.

It will be appreciated that each of the control outputs described herein may be performed independently. Accordingly, whilst described as a single system for efficiency and completeness, it will be understood that alternative embodiments may include only one or more of the control outputs described herein. For instance, a variant of a control system may be provided which consists solely with the control over the display terminal 28 of the harvester 2.

### Alternative Embodiments

Whilst illustrated herein in the context of a forage harvester 2, the solution described herein may be equally applicable to other harvesting equipment. For example, in some use cases the crop monitoring system(s) described herein may be provided as part of a combine harvester for harvesting grain like material. The crop quality sensor in such embodiments may be provided in a crop stream, such as in or in relation to a grain elevator of the harvester, or within the grain tank, for example. For a combine harvester, the support vehicle may comprise a trailer or "grain cart" towed by a further machine, e.g. a tractor.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A system for monitoring and tracking one or more crop properties associated with a batch of crop material processed by the harvesting machine, the system comprising:
the harvesting machine;
a crop quality sensor operably coupled to the harvesting machine having a sensing region which comprises, at least in part, crop material processed by the harvesting machine or components thereof;
a tracking sensor operably coupled to the harvesting machine having a sensing region which comprises, at least in part, an external environment of the harvesting machine; and
one or more controllers, operably configured to:
determine, from first sensor data received from the crop quality sensor, one or more crop properties indicative of a quality measurement associated with a batch of crop material;
determine, from second sensor data received from the tracking sensor, an identity of a support vehicle within the environment of the harvesting machine; and
generate, for the identified support vehicle, an operational plan in dependence on the determined one or more crop properties.

2. A system of claim 1, wherein determination of the operational plan includes determining, in dependence on the crop property(ies) and/or determined identity of the support vehicle a storage location for a respective batch of crop material.

3. A system of claim 1 or claim 2, wherein determination of the operational plan includes determining, in dependence on the crop property(ies), a requirement for further processing of the crop material batch within the given support vehicle.

4. A system of any preceding claim, wherein the one or more controllers are configured to initiate control of a user interface of the support vehicle for displaying a graphical representation of the operational plan.

5. A system as claimed in any preceding claim, wherein the one or more controllers are configured to receive and analyse the first sensor data from the crop quality sensor for determining the one or more crop properties, including performance of an object recognition process on first sensor data received from the crop quality sensor for identifying individual crop material components within the sensor data, and determining one or more crop properties thereof.

6. A system of any preceding claim, wherein the one or more crop properties comprise any one or more of:
a measure of one or more dimensions of crop material component(s);
a length, width, shape, surface area or estimate of a volume of the identified crop material components;
a measure of a colour or hue of crop material components;
a measure of a processing score for the crop material;
a measure of a crop yield; and/or
an identification of the presence or absence of one or more anomalous objects within the batch of crop material.

7. A system of any preceding claim, wherein the crop quality sensor is configured to be coupled, in use, to the harvesting machine at or proximal to a crop flow associated with the harvesting machine.

8. A system of claim 7, wherein the harvesting machine comprises a forage harvester, and the crop quality sensor is configured to be coupled, in use, with a sensing region which encompasses a crop flow in a discharge spout of the forage harvester.

9. A system of any preceding claim, wherein the one or more controllers are configured to receive and analyse the second sensor data from the tracking sensor for determining the identity of a support vehicle in the environment of the harvesting machine, including identifying one or more objects within the second sensor data through performance an object recognition process or classification process on second sensor data received from the tracking sensor.

10. A system of any preceding claim, wherein the one or more controllers are configured to identify an unloading event through analysis of the second sensor data from the tracking sensor, including a start and/or stop time for when crop material is unloaded from the harvesting machine to a given support vehicle.

11. A system of claim 10, wherein the one or more controllers are configured to associate the batch of crop material and the associated one or more crop properties with the identified support vehicle in dependence on an identification of an occurrence of an unloading event.

12. A system of claim 10 or claim 11, wherein the one or more controllers are configured to initiate collection of the first and/or second sensor data in dependence on an identification of an unloading event and/or determining an identity of a support vehicle.

13. A system of any preceding claim, wherein the one or more controllers are configured to generate and output one or more control signals for controlling operation of one or more systems or operable components of or otherwise associated with the harvesting machine and/or the support vehicle in dependence on the operational plan.

14. A control system for monitoring and tracking one or more crop properties associated with a batch of crop material processed by a harvesting machine, the control system comprising one or more controllers which are collectively configured to:
receive first sensor data, from a crop quality sensor operably coupled to the harvesting machine having a sensing region which comprises, at least in part, crop material processed by the harvesting machine or components thereof;
receive second sensor data from a tracking sensor operably coupled to the harvesting machine having a sensing region which comprises, at least in part, an external environment of the harvesting machine;
determine, from the first sensor data, one or more crop properties indicative of a quality measurement associated with a batch of crop material;
determine, from the second sensor data an identity of a support vehicle within the environment of the harvesting machine;
and generate, for the identified support vehicle, an operational plan in dependence on the determined one or more crop properties.

15. A method of monitoring and tracking one or more crop properties associated with a batch of crop material processed by a harvesting machine, the method comprising:
receiving first sensor data from a crop quality sensor operably coupled to the harvesting machine having a sensing region which comprises, at least in part, crop material processed by the harvesting machine or components thereof;
receiving second sensor data from a tracking sensor operably coupled to the harvesting machine having a sensing region which comprises, at least in part, an external environment of the harvesting machine;
determining, from the first sensor data, one or more crop properties indicative of a quality measurement associated with a batch of crop material;
determining, from the second sensor data, an identity of a support vehicle within the environment of the harvesting machine; and
generating, for the identified support vehicle, an operational plan in dependence on the determined one or more crop properties.
